Europäisches Patentamt

(19) European Patent Office

Office européen des brevets

(11) Publication number: **0 175 534**
A2

(12) # EUROPEAN PATENT APPLICATION

(21) Application number: 85306386.5

(22) Date of filing: 09.09.85

(51) Int. Cl.⁴: **B 60 C 7/10,** B 60 C 17/04, B 60 C 5/00, B 60 C 17/06

(30) Priority: 10.09.84 CA 462813

(43) Date of publication of application: 26.03.86 Bulletin 86/13

(84) Designated Contracting States: **AT BE CH DE FR GB IT LI LU NL SE**

(71) Applicant: **VALHALLA INVESTMENTS LIMITED, P.O. Box 1044 West Wind Building, Grand Cayman British West Indies (KY)**

(72) Inventor: **Ocoin, Bernard Joseph, 1009 Roxborough Drive, Oakville Ontario (CA)**

(74) Representative: **Jenkins, Richard Gray et al, R.G.C. Jenkins & Co. 12-15, Fetter Lane, London EC4A 1PL (GB)**

(54) **Flat proof tyre with reusable core and method of installation.**

(57) A flat-proof tyre comprising a tyre casing and a tyre core within the casing, characterised in that the tyre core comprises a plurality of separate concentric rings of elastomeric material.

EP 0 175 534 A2

FLAT PROOF TYRE WITH REUSABLE CORE
AND METHOD OF INSTALLATION

The present invention relates to an improved method of installing a core in a tyre casing to provide a flat proof tyre which has a re-useable core that uses a material that can be compressed in the casing to give the pressure required by the casing use. In particular the invention herein resides in the provision of a solid core for the casing which core can be made of a pre-vulcanised void free elastomer. However, a superior performance is achieved from separate layers of rings of cellular foam rubber that interfit one with the other concentrically in the casing to provide ease of installation and ease of removal for reuse of the core when the casing is worn or damaged.

It is known to provide tyre casings for vehicles used in 'flat' prone situations, with casings that are filled with material that will prevent the tyre from flattening out when the casing is punctured by an object on the vehicle's path. One known method is to fill a wheel-mounted tyre through its valve with a urethane mixture which congeals in the tyre at the proper pressure to create a solid flat-proof combination. The casing is filled to the pressure required by the user and then allowed to congeal in the casing. Another known method is to put a predetermined amount of unvulcanised foamed rubber into the casing and after installation on a wheel rim place the whole assembly into an autoclave to cause the rubber core to form and expand as one mass within the casing to the required running pressure for the tyre.

In the known systems of filling tyre casings with urethane to provide run-flat characteristics to a tyre the major disadvantage is that the fill material is expensive and is lost when the tyre is worn or damaged. Another disadvantage is that an unskilled person has difficulty achieving the proper pressure for an individual tyre being filled. The use of vulcanised rubber in a tyre is a skill not usually found in the field where common workmen would be used to repair and install tyres on vehicles with damaged tyres. There is consequently a need for cores which are premade in a range of sizes to fit the known range of manufacturers tyre casings and for a method or system of mounting such cores in different manufacturers tyres without any skill besides the knowledge of operating the known tyre presses.

An object of the present invention therefore is to provide a run-flat tyre for trucks and other related heavy duty vehicles, having a core composed of a series of interfitting concentric rings of high density foam rubber which rings can be mounted into the tyre casing sequentially and then the combination pressed to a wheel rim to provide the correct running pressure for the particular casing. The core rings are made from a material that is installed under pressure and is compressed within the casing and expands to fill the casing as the casing 'grows' with use. Another object of the invention is to provide a method of mounting a core into a casing that permits the core to be removed easily for reuse after the tyre casing is worn or damaged. A further object of the invention is to provide the core with a layered structure such that if one layer or ring is destroyed when the tyre casing is destroyed the remaining rings can be saved and used again when they are removed from the punctured casing. A further object of the invention is to combine core with a run-flat system such as is provided when a small tyre casing is mounted in a large casing and has within it a layered core. The use of the ringed core of the present invention in place of a solid core within the run-flat tyre is an alternative use of the invention.

Yet a further object of the invention is to specify the type of foam rubber which will give the

0175534

best results for different uses, such as for highway truck use or fork lift use in yards and worksites.

A method and product and system of providing a reuseable puncture resistant and flat proof tyre is comprised of selecting a type of high density closed cell foamed rubber to suit the speeds and loads and thus to develop the pressures contemplated to be used by the particular casing, and then moulding a plurality of rings from the rubber capable when interfitted sequentially and concentrically within the tyre casing to fill the tyre casing cavity. The outer surfaces of the rings are made to mate and simulate the inner surface of the tyre cavity, and when interfitted together to fill the cavity, a wheel rim is pressed on to force the combination of core rings and casing into a pressurised system with allowance for casing growth during use.

According to one aspect of the invention we therefore provide a flat-proof tyre comprising a tyre casing and a tyre core within the casing, characterised in that the tyre core comprises a plurality of separate concentric rings of elastomeric material.

According to a further aspect of the invention we provide a method of mounting a flat-proof tyre as described above on a vehicle wheel comprising the steps of

- inserting a plurality of separate concentric rings of elastomeric material sequentially into a tyre casing

- mounting the tyre casing containing the tyre core onto a vehicle wheel so that the tyre casing is placed under tension to compress the tyre core within the casing.

Specific embodiments of the invention will now be described with reference to the accompanying drawings, in which:-

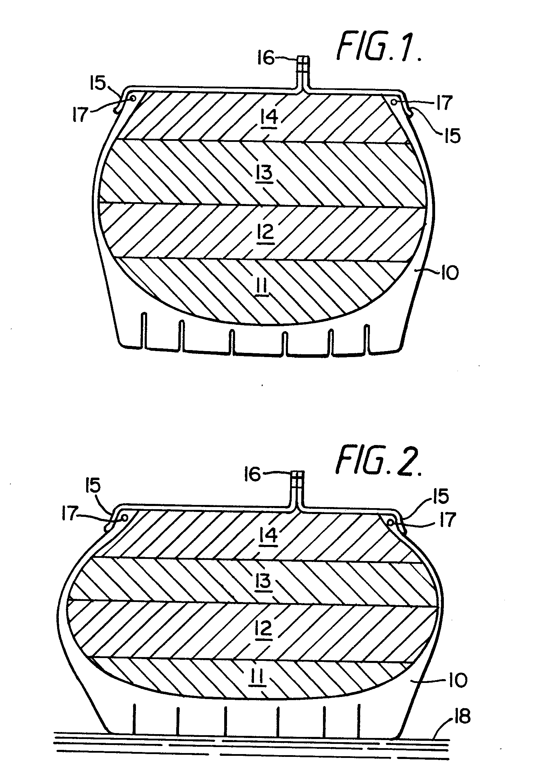

Figure 1 is a sectional view of a tyre casing showing the positioning of tyre core comprising four rings within the casing and prior to loading of the tyre.

Figure 2 is a view of the casing and interfitted rings of figure 1 after loading and showing the rings conforming to the tyre cavity walls as the casing deforms;

Figure 3 is a perspective view of a tyre casing partly cut away to show four rings, also partly cut away, and interfitted in the tyre cavity but prior to installation on a wheel rim;

Figures 4, 5, 6 and 7 show the method of installing the rings of the core sequentially, in which the tyre casing is spread to receive each ring; and

Figures 8 and 9 show the tyre core of Figures 1 to 3 used in combination with a run-flat tyre and a small inner casing to maintain the core in place.

In the drawings there is shown a tyre casing 10 and a tyre core comprising four individual rings 11, 12, 13 and 14 of high density foamed rubber which are held under pressure by rims 15 of a vehicle wheel 16. The tyre casing 10 is forced onto the wheel 16 by the usual press method for truck tyre rims and is contained under tension by engagement of the casing flanges 17 and the wheel rims 15. The rings 11, 12, 13, 14 of the core are then held under tension within the casing as a result of the tension in the casing. The rings 11, 12, 13, 14, being made of high density foam rubber have the flexibility to conform to the shape of the tyre casing.

The percentage of foaming of the rubber from which the rings are made, its density, tensile strength, hardness and elasticity are all pre-calculated to provide the desired performance characteristics with regard to the loads, speeds, pressures and thermal conditions to which the core will be subjected.

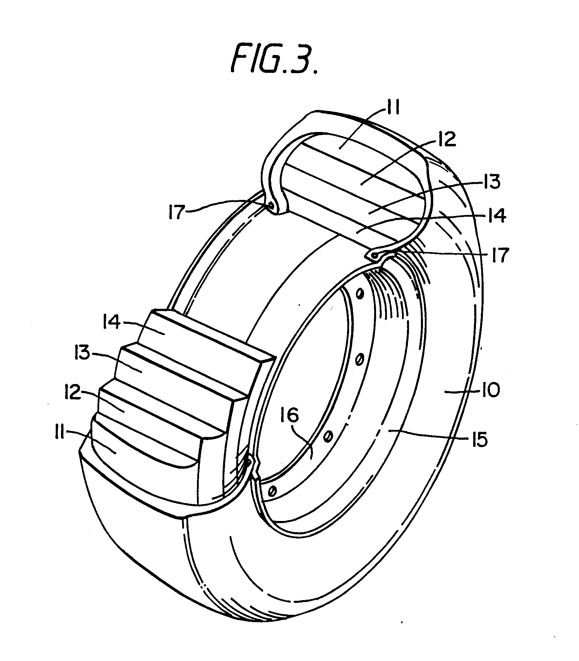

Figure 2 shows the tyre under load on a road surface 18 and demonstrates how the rings deform to fill the casing cavity. Figure 3 shows how the rings have been individually designed to mate with one another and with the side walls of the casing cavity.

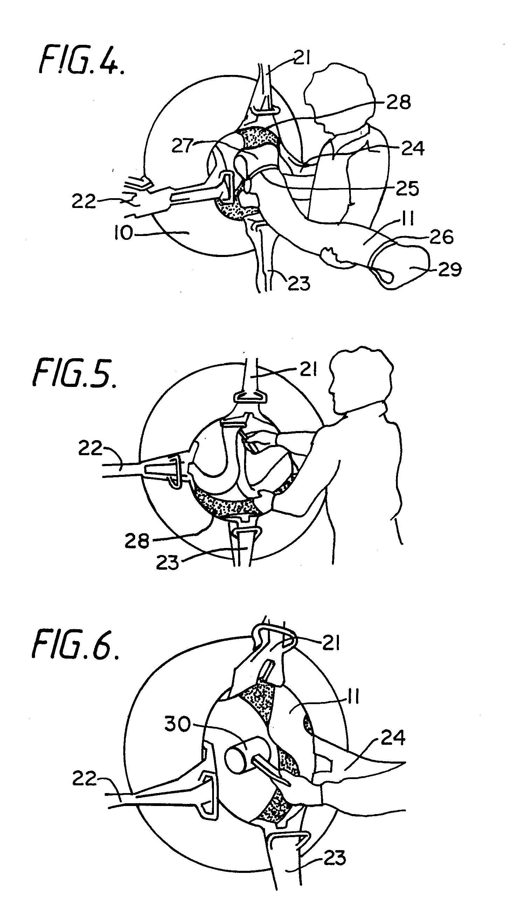

Figures 4, 5, 6 and 7 illustrate a manual method of installing an individual ring 11. The casing 10 is first spread by a tyre spreader comprising four straps 21,22,23,24. For ease of storage and transport the ring 11 can be tied in a bundle by binding 25 and 26. The operator first pushes one end of the bundled ring into the tyre cavity 28, then unties the binding 25 and spreads the end 27 to mate with the cavity walls of the tyre casing. The other end 29 of the ring bundle is next pushed up into the cavity 28 and the binding 26 released as shown in Figure 5. The operator then manually pushes the ring into full mating position against the inside wall of the tyre cavity, using a rubber mallet 30 if necessary, to force the resisting foam rubber of the ring into the position shown in Figure 6. The remaining rings are then each fitted in the same way in their proper order into the tyre casing until the core fills the casing as shown in Figure 3. The core and casing combination is next placed in a press where the wheel and rim are forced onto the tyre beads compressing the rings of the core to create the desired running pressure for the tyre under load.

It is to be understood that a range of sizes of rings will be available for a range of similar manufacturers tyre casings to thereby provide the installer with a known set of rings for known casings.

It is well known that there is no real standard casing size in the trade and the physical dimensions of different manufacturer's casings may be different even where they are supposed to fit identical rims. The tyre core rings described herein are made for specific manufacturers' casings and may be so identified by label with a notice that a set of rings will fit casings of similar internal dimensions within variations of up to ten percent in the cavity size. A skilled workman is therefore required to recognise the variations before installing a set of rings in any particular casing.

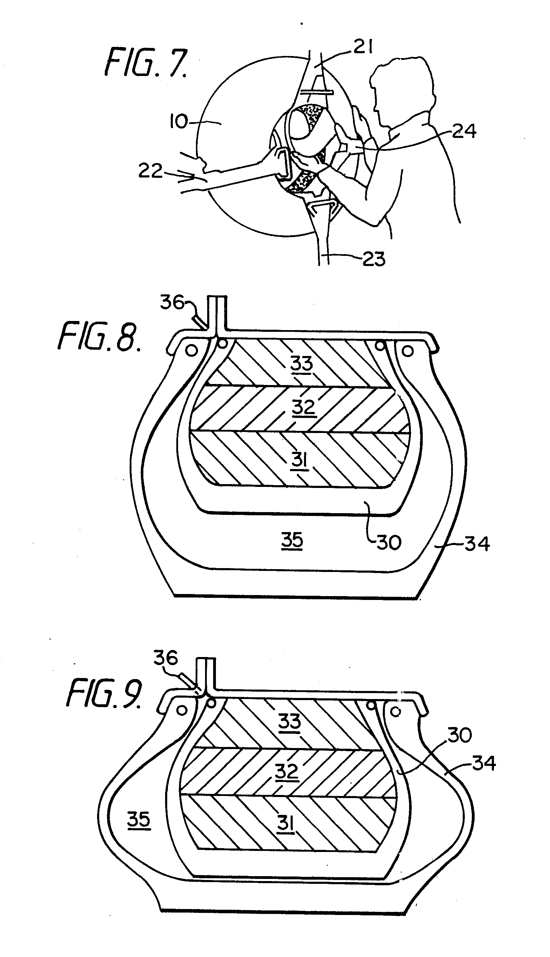

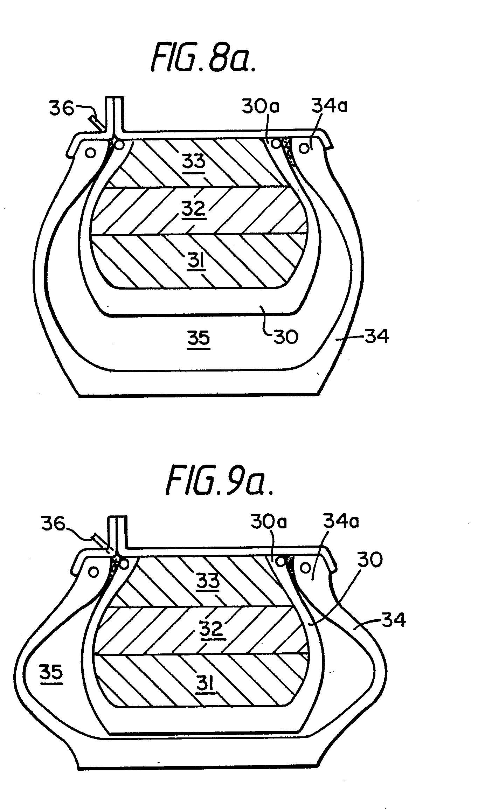

An alternative embodiment of the invention is shown in figures 8 and 9 where an inner casing 30 is fitted with a core comprising three rings 31, 32 and 33 and is then itself pressed onto a rim with and within a larger outer casing 34. The space 35 between the casing 30 and the casing 34 is filled with air under pressure through a valve 36. A run-flat system is thereby provided with the inner casing 30 and the ring combination 31,32,33 being the support for a punctured outer casing 34 as in Figure 9. Figures 8A and 9A illustrate a slightly modified version in which the bead 30a of the inner casing 30 is compressed within the bead 34a of the outer casing 34.

CLAIMS:

1.   A flat-proof tyre comprising a tyre casing and a tyre core within the casing, characterised in that the tyre core comprises a plurality of separate concentric rings of elastomeric material.

2.   A tyre as claimed in claim 1, characterised in that the elastomeric material is a pre-vulcanised void free elastomer.

3.   A tyre as claimed in claim 1 or claim 2, characterised in that the elastomeric material is a cellular foam rubber.

4.   A tyre as claimed in any preceding claim, characterised in that the elastomeric material is a high density closed cell foam rubber.

5.   A tyre as claimed in any preceding claim, characterised in that the rings are so shaped that in combination they substantially fill the tyre casing.

6.   A flat-proof tyre comprising a tyre casing and a tyre core as claimed in any preceding claim characterised in that the tyre casing and the tyre core are mounted within an outer casing with an inflatable void between the tyre casing and the outer casing.

7.   A vehicle wheel comprising a flat proof tyre as claimed in any of claims 1 to 5 mounted on the vehicle wheel with the tyre casing contained under tension by the vehicle wheel rims, characterised in that the tyre core is compressed by and substantially fills the tyre casing.

8. A vehicle wheel comprising a flat proof tyre as claimed in claim 6 mounted on the vehicle wheel with the outer casing and the tyre casing contained by the vehicle wheel rims, characterised in that the tyre core is compressed by and substantially fills the tyre casing.

9. A method of mounting a flat proof tyre as claimed in any of claims 1 to 5 on a vehicle wheel comprising the steps of

- inserting a plurality of separate concentric rings of elastomeric material sequentially into a tyre casing and

- mounting the tyre casing containing the tyre core onto a vehicle wheel so that the tyre casing is placed under tension to compress the tyre core within the casing

10. A method of mounting a flat proof tyre as claimed in claim 6 on a vehicle wheel comprising the steps of

- inserting a plurality of separate concentric

3.

rings of elastomeric material sequentially into a tyre casing

- mounting the tyre casing containing the tyre core within an outer tyre casing

- mounting the outer tyre casing containing the tyre casing and the tyre core on a vehicle wheel and

- inflating the void between the tyre casing and the outer casing.

*FIG.1.*

16

15

17

17

15

14

13

12

11

10

*FIG.2.*

16

15

17

15

17

14

13

12

11

10

18

## FIG.3.

FIG.4.

FIG.5.

FIG.6.

**FIG. 7.**

**FIG. 8.**

**FIG. 9.**

0175534

## FIG.8a.

## FIG.9a.